# EUROPEAN PATENT SPECIFICATION

(11) **EP 4 186 869 B1**
(45) Date of publication and mention of the grant of the patent: **23.10.2024**
(21) Application number: 22209514.3
(22) Date of filing: 25.11.2022
(51) Int. Cl.: C02F 1/72, C02F 1/66

(54) **SOLUTION OF PEROXYACETIC ACID AND HYDROGEN PEROXIDE FOR THE DISINFECTION OF WASTEWATER FROM BIOLOGICAL PURIFIERS**
LÖSUNG VON PERESSIGSÄURE UND WASSERSTOFFPEROXID ZUR DESINFEKTION VON ABWASSER AUS BIOLOGISCHEN REINIGUNSANLAGEN
SOLUTION D'ACIDE PÉRACÉTIQUE ET PEROXYDE D'HYDROGÈNE POUR LA DÉSINFECTION DES EAUS USÉES DES PURIFICATEURS BIOLOGIQUES

(30) Priority: 29.11.2021 IT 202100030128
(43) Date of publication of application: 31.05.2023
(73) Proprietor: Promox S.p.A., 21100 Varese (IT)
(72) Inventor: MINOTTI, Gabriele, 21038 Leggiuno (IT); TENCONI, Mauro, 21045 Gazzada (IT)
(74) Representative: Palladino, Saverio Massimo

(56) References cited:
- EP-A1- 1 375 634
- CN-A- 111 328 807
- US-A- 5 965 033
- US-A1- 2013 264 059

## Description

### FIELD OF THE INVENTION

The present invention relates to a novel aqueous solution formulation, containing peroxyacetic acid and hydrogen peroxide as active components, for disinfecting wastewater from biological purifiers. The invention also relates to the method for the disinfection of wastewater from biological purifiers through the use of the novel aqueous solution based on peroxyacetic acid.

### STATE OF THE ART

Solutions of peroxyacetic acid (also known as peracetic acid and indicated in the sector with the abbreviation PAA) have been used since the early 1990s to disinfect wastewater from biological purifiers. The advantages of using PAA are:
- absence of toxic residues at the end of its decomposition;
- broad spectrum of action against microorganisms;
- little influence on disinfection of organic residues present in the water (suspended solids);
- ease of use.

The PAA solution commonly used for this application is a chemical equilibrium solution containing, by weight:
- 15% of peroxyacetic acid;
- 23% of hydrogen peroxide (H₂O₂);
- 17% of acetic acid (AcOH);
- 45% of water.

This solution is added to previously purified water in amounts generally comprised between 5 and 10 grams of solution per cubic meter of water to be treated; the water added with the solution remains in a contact tank for about thirty minutes and is then released into the environment.

During the stay in the contact tank, PAA reacts with the bacteria and impurities, and its amount is reduced by over 99%; hydrogen peroxide is inherently more stable and is reduced by about 93%. Some studies in the sector have shown that, at 20 °C, hydrogen peroxide has a half-life of 89 minutes, while PAA has a half-life of less than 5 minutes.

Using, for example, 10 g of PAA solution per cubic meter of water to be treated, and assuming during treatment a PAA conversion > 99% and an average H₂O₂ conversion of about 93%, in the effluent there will be:
- peroxyacetic acid between 8.94×10⁻⁹ and 3.66×10⁻⁵ g/m³;
- hydrogen peroxide between 1.44×10⁻¹ and 1.82×10⁻¹ g/m³;
- acetic acid between 2.83 and 2.93 g/m³.

During the thirty years since the introduction of the use of PAA in this application, the toxicity of water purified and disinfected with this compound has been constantly evaluated following the official methods established by current regulations (see for example the "OECD Guidelines for the Testing of Chemicals", and the ISO 8692 standard), which include ecotoxicity tests on Daphnia magna and luminescent bacteria, without ever finding any traces.

The Biocides Directive 98/8/EC and its subsequent updates have introduced many limitations on the production and use of biocides.

According to the study "Peracetic acid 15% - early life stage toxicity test with zebrafish (Danio rerio) under flow-through conditions", D. Scheerbaum (2007*),* PAA would be particularly toxic to embryos of zebrafish (*Danio rerio*), a small freshwater fish native to Asia. The toxicity detected in the study is due to the sum of the amounts of PAA and hydrogen peroxide still present at the exit from the contact tank. Studies on zebrafish are particularly important for several reasons: their embryos are nearly transparent, which allows researchers to easily examine the internal structures development; it has a genetic structure similar to that of humans, sharing 70% of genes; 84% of genes known to be associated with human diseases have a zebrafish counterpart; finally, the zebrafish genome has been completely sequenced at a very high quality, which allows scientists to create mutations in more than 14,000 genes to study their function.

The importance of studies carried out on zebrafish was recently confirmed by a Risk Assessment Committee (RAC) of the European Chemicals Agency (ECHA) which issued an opinion, dated 2 June 2022, regarding the chronic toxicity of PAA. The opinion is available at the link: https://echa.europa.eu/it/registry-of-clh-intentions-until-outcome/- /dislist/details/0b0236e184e0eae4.

On page 24 of the document (English text) it is stated that "*The chronic toxicity study on fish (Danio rerio) according to OECD TG 210 indicates that fish are the most sensitive organism in case of chronic exposure*"; towards the end of the same opinion page, it is stated that "*In this case, the most stringent classification and M-factor is based on the results of the chronic toxicity value with fish (Danio rerio). Therefore, RAC considers that PAA warrants chronic classification as: **Aquatic Chronic** 1 based on NOEC* = *0.00069 mg*/*L for Danio rerio. As this chronic toxicity value falls within the 0.0001* < *NOEC* ≤ *0.001 mg*/*L range, the **chronic M-factor is 100.***"

This ECHA opinion therefore recognizes the general validity of the toxicity results obtained in zebrafish, and the fact that these results can be used as indicators of toxicity for all species.

Based on Scheerbaum's work, it can be deduced that the concentration value of PAA, in the waters downstream of a disinfection treatment, for which there are no longer toxic effects on zebrafish, is 6.9×10⁻⁵ mg/l (data also included in the "Peracetic Acid Assessment Report 2015"); this maximum admissible value is indicated in the sector as PNEC (from Predicted No Effect Concentration).

Following studies on Daphnia magna reported in the "Hydrogen Peroxide Assessment Report 2015", toxic effects have been identified also for H₂O₂; in this case the PNEC value is 1.26×10⁻² mg/1. Further relevant documents are US 5 965 033 A, EP 1 375 634 A1, CN 111 328 807 A.

Following these studies, the competent bodies have expressed reservations on the possibility of using the PAA solutions currently on the market for water disinfection.

The object of the present invention is to provide a novel aqueous solution formulation based on peroxyacetic for disinfecting wastewater from biological purifiers, which has a disinfection efficacy comparable to the solutions currently in use but reduced or no toxicity, as well as providing the method for using the aqueous solution in the disinfection of said waters.

### SUMMARY OF THE INVENTION

These objects are achieved according to the present invention, which in a first aspect thereof relates to a solution containing peroxyacetic acid and hydrogen peroxide in different ratios compared to those of the known solutions comprising, by weight:
- from 1 to 35% of peroxyacetic acid;
- from 0.05 to 3.9% of hydrogen peroxide;
- from 50 to 98,5% of acetic acid;
- balance to 100% with water and at least one peroxide stabilizer;
provided that the percentage by weight of peroxyacetic acid calculated on the sum of peroxyacetic acid and hydrogen peroxide weights is at least equal to:
- 95.0% for a solution to be used for a treatment time of 30 minutes;
- 90.0% for a solution to be used for a treatment time of 45 minutes;
- 88.5% for a solution to be used for a treatment time of 60 minutes; and
- 86.5% for a solution to be used for a treatment time of 90 minutes.

In the second aspect thereof, the invention relates to a method for the disinfection of wastewater from biological purifiers through the use of the solution described above, which consists in dosing a predetermined amount of solution in the water to be treated, leaving the water thus added in a treatment/containment tank for a time between 30 and 90 minutes, preferably between 30 and 60 minutes, and then unloading the tank.

### DETAILED DESCRIPTION OF THE INVENTION

In the following description, all percentages are to be intended by weight unless otherwise indicated.

The invention is based on the observation by the inventors that the bactericidal effect of these solutions essentially depends only on PAA, while the toxicity of the wastewater downstream of the treatment also, if not above all, depends on hydrogen peroxide. The solutions of the invention are used in amounts such as to keep the amount of PAA essentially constant per cubic meter of water used in the known methods.

In the field of environmental studies, the PEC/PNEC ratio is used as a parameter for evaluating the effects of chemical compounds, where PEC stands for "Predicted Environmental Concentration" (see for example the report by the Environmental Risk Management System "From PEC_PNEC ratio to quantitative risk level using Species Sensitivity Distribution" dated 2005, available online at the link: https://www.sintef.no/globalassets/project/erms/reports/erms-report-no-10_pec_pnec-to-risk-ssd_tno.pdf). In order for PAA solutions to produce, downstream of the treatment, nontoxic concentrations of PAA and H₂O₂ species, the condition PEC/PNEC < 1 should be satisfied, where the PEC and PNEC values considered are the cumulative values for the two species indicated above.

The inventors observed that the solutions of the invention are able to obtain the desired disinfection effect, while producing concentrations of PAA and H₂O₂ in the water downstream of the treatment such as to satisfy the condition PEC/PNEC < 1.

Preferred solutions for the purposes of the present invention comprise, by weight:
- from 5 to 32% of peroxyacetic acid;
- from 0.1 to 3.6% of hydrogen peroxide;
- from 55 to 93% of acetic acid;
- balance to 100% with water and at least a peroxide stabilizer.

Even more preferably, the solutions of the invention comprise, by weight:
- from 9 to 25% of peroxyacetic acid;
- from 0.8 to 2.8% of hydrogen peroxide;
- from 65 to 85% of acetic acid;
- balance to 100% with water and at least a peroxide stabilizer.

In particular, the preferred composition of the invention comprises, by weight:
- 12.1% of peroxyacetic acid;
- 1.0% of hydrogen peroxide;
- 79.1% of acetic acid;
- 7.8% of water and at least a peroxide stabilizer.

The peroxide stabilizers which can be used in the invention are those known for the purpose in the chemistry field and they can be, for example, a mixture of dipicolinic acid and hydroxy-ethylene-diphosphonic acid in an amount lower than 0.5% by weight in the solution, in the presence of a mineral acid in an amount lower than 0.5% by weight in the solution.

In the preparation of the solutions of the invention, it is necessary to operate in such a way as to avoid entering the explosive range of the mixture; for this purpose, hydrogen peroxide is added to acetic acid, and the mixture thus obtained is then added to PAA.

Table 1 shows, as an example, the amounts of standard solution of the prior art and of a solution of the present invention necessary to add 1.5 g of peroxyacetic acid to a cubic meter of wastewater from a biological purifier. The standard solution contains 15% of peroxyacetic acid, 23% of hydrogen peroxide and 17% of acetic acid (balance with water and known peroxide stabilizers); the solution of the invention contains 12.1% of peroxyacetic acid, 1% of hydrogen peroxide and 79.1% of acetic acid (balance with water and known peroxide stabilizers). The table shows the amounts of PAA, hydrogen peroxide and acetic acid which are added to the water through these solutions. The percentage values of the PAA/(PAA+H₂O₂) weight ratio for the two solutions are also reported.

**Table 1**

| | Amount (g) | |
|---|---|---|
| | Prior art solution | Invention solution |
| Complete solution | 10.0 | 12.5 |
| PAA | 1.5 | 1.5 |
| H₂O₂ | 2.3 | 0.13 |
| AcOH | 1.7 | 9.9 |
| PAA/(PAA+H₂O₂) | 39.5% | 92.0% |

Table 2 shows instead the estimated amounts of PAA, H₂O₂ and AcOH which are released together with the treated solution, assuming a PAA conversion during the treatment equal to 99% and an average conversion of H₂O₂ equal to 93%, and considering a treatment time of 45 minutes and a dilution factor of 10; the dilution factor is determined (with a conservative estimate) by the flow of treated wastewater in the watercourse or reservoir (e.g. river) into which it is finally unloaded.

The last lines of the table also show the values of the PEC/PNEC ratio, for the individual PAA and H₂O₂ species and for the total, obtained with the two solutions.

**Table 2**

| | Amount (g) | |
|---|---|---|
| | Known technical solution | Invention solution |
| PAA | 5.72×10⁻⁷ | 5.72×10⁻⁷ |
| H₂O₂ | 1.62×10⁻¹ | 8.73×10⁻³ |
| AcOH | 2.88 | 11.08 |
| PEC/PNEC PAA | 0.01 | 0.01 |
| PEC/PNEC H₂O₂ | 12.86 | 0.69 |
| PEC/PNEC TOT | 12.87 | 0.70 |

The amounts of AcOH leaving the treatment are higher than the initial ones due the fraction deriving from PAA decomposition.

As can be seen from the data in Table 2, using the solutions of the invention with the same PAA added, and therefore the same bactericidal effect, the PEC/PNEC TOT value is much higher than 1 in the case of the known solution, and lower than 1 in the case of the invention, prove of the absence of toxic effects of the latter.

In its second aspect, the invention relates to the method for using the solutions described above for the disinfection of wastewater from biological purifiers. The method consists in dosing a desired amount of solution in the water to be treated; typically this amount is between 5 and 10 g of solution of the invention per cubic meter of water. The treatment consists in leaving the water thus added in a treatment tank for between 30 and 60 minutes, and then unloading the tank; these treatment times are generally obtained with tanks with a "labyrinth" system to guarantee the desired contact time between the wastewater and the PAA.

The invention will be further illustrated by the following examples.

### EXAMPLE 1

This example refers to the verification of the biocidal properties of a solution of the invention and, for comparison, of a standard solution of the prior art.

The solutions tested are the same as reported in Table 1 above. To carry out the tests, the solutions were diluted to a concentration of 0.0012% by weight with hard water and the test microorganisms were added separately to each container.

Suspensions of test microorganisms were standardized by dilution using a tryptone saline solution (previously sterilized at 121 °C for 15 minutes) and bringing the final concentration of the bacterial inoculum into contact with the product, as follows:
- Total coliforms, 10⁵ CFU/100 ml,
- *Escherichia coli,* 10⁴ CFU/100 ml,
- *Streptococcus faecalis* 10⁴ CFU/100 ml.

A test with the two solutions was carried out for each of the bacterial cultures indicated above and for each of the predefined contact times, shown below, between solutions and said cultures.

A culture control sample was collected immediately and represents the concentration present at the start of the test, *i.e.* time zero. At time intervals of 6, 12, 18, 36, 42, 54 and 60 minutes, a 100 ml aliquot was homogenized by shaking and transferred to a filtration apparatus equipped with a 0.45 µm pore membrane and immediately filtered. 200 ml of rinsing liquid were then transferred into the filtration apparatus and immediately filtered. The filtration procedure was completed with a filtration with 50 ml of sterile water. After filtration, the membrane was laid on the surface of a Petri dish containing Agar. The plates were incubated at 32.5 °C ± 2.5 °C for 3 days. After incubation, using the calculated concentrations of CFU/100 mL present at the start of the test and CFU/100 mL concentration for each microorganism after the test intervals, the microorganisms decrease percentage were calculated by comparing the initial microbial concentrations with the final microbial concentrations; the decrease percentage was calculated with the formula (X - Y)/X × 100, where X = number of CFU/100 ml in the control immediately after inoculation and Y = number of CFU/100 ml after the contact time.

The tests results are shown in Tables 3, 4 and 5 for total Coliforms, *Escherichia coli* and *Streptococcus faecalis*, respectively.

**Table 3**

| Initial CFU/100 ml | Contact time (min) | Decrease % | |
|---|---|---|---|
| | | Invention solution | Prior art solution |
| 1.3 × 10⁵ | 6 | 82.31 | 89.48 |
| 2.0 × 10⁵ | 12 | 97.75 | 99.84 |
| 1.6 × 10⁵ | 18 | 99.06 | 99.96 |
| 2.1 × 10⁵ | 36 | 99.74 | 99.99 |
| 1.8 × 10⁵ | 42 | 99.94 | > 99.99 |
| 1.7 × 10⁵ | 54 | 99.96 | > 99.99 |
| 1.4 × 10⁵ | 60 | 99.98 | > 99.99 |

**Table 4**

| Initial CFU/100 ml | Contact time (min) | Decrease % | |
|---|---|---|---|
| | | Invention solution | Prior art solution |
| 2.7 × 10⁴ | 6 | 18.52 | 42.22 |
| 2.4 × 10⁴ | 12 | 67.92 | 99.36 |
| 2.9 × 10⁴ | 18 | 78.62 | 99.59 |
| 3.0 × 10⁴ | 36 | 97.33 | 99.84 |
| 2.3 × 10⁴ | 42 | 99.13 | > 99.99 |
| 2.6 × 10⁴ | 54 | > 99.99 | > 99.99 |
| 2.4 × 10⁴ | 60 | > 99.99 | > 99.99 |

**Table 5**

| Initial CFU/100 ml | Contact time (min) | Decrease % | |
|---|---|---|---|
| | | Invention solution | Prior art solution |
| 4.6 × 10⁴ | 6 | 13.04 | 65.85 |
| 4.8 × 10⁴ | 12 | 27.98 | 66.67 |
| 4.3 × 10⁴ | 18 | 53.49 | 73.24 |
| 5.0 × 10⁴ | 36 | 84.00 | 86.44 |
| 5.2 × 10⁴ | 42 | 88.46 | 88.68 |
| 4.7 × 10⁴ | 54 | 99.46 | n.a. |
| 4.4 × 10⁴ | 60 | 99.96 | n.a. |

### EXAMPLE 2

This example refers to the verification of the toxicity properties of solutions containing different concentrations of hydrogen peroxide.

Two solutions were prepared, one of the invention and one for comparison. The solution of the invention had essentially the same composition as the solution used for the test of Table 1, *i.e.,* 12.1% peroxyacetic acid, 1.0% hydrogen peroxide and 79.2% acetic acid, balance to 100% with water and known peroxide stabilizers. To highlight the effects of hydrogen peroxide, the comparison solution had a high concentration of this compound; the composition of this solution was 2.8% peroxyacetic acid, 64.3% hydrogen peroxide and 0.7% acetic acid, balance to 100% with water and known peroxide stabilizers.

The two solutions were dosed in water in amounts of 23 mg/l and 100 mg/l, respectively, to have the same concentration of peroxyacetic acid, *i.e.,* 2.8 mg/l, in the resulting solution.

The two solutions thus obtained were used for toxicity tests on embryos of zebrafish (*Danio rerio*)*,* carried out according to the OECD 236:2013 standard, over a time span of 96 hours. The results of the two tests were a mortality of zebrafish embryos equal to 65% in the case of the comparison solution, and equal to 10% in the case of the solution of the invention.

### Comment on the results

As can be seen from the data in Tables 3-5, the solutions of the invention have bactericidal properties essentially comparable to those of the prior art solution, but with a lower or distinctly lower H₂O₂ content; this confirms that H₂O₂ has essentially no influence on the bacterial load abatement properties, while its decrease according to the present invention allows to reduce the toxicity of the waters released downstream of the antibacterial treatment, as evidenced by the PEC/PNEC value data shown in Table 2 .

Furthermore, the toxicological tests of Example 2 highlighted the greater toxicity of solutions with a higher content of hydrogen peroxide; the possibility, offered by the present invention, of obtaining bactericidal properties essentially comparable to those of the prior art solution, but with a lower toxicity on higher animals, represents a notable advantage offered by the invention.

## Claims

1. Aqueous solution comprising, by weight:
- from 1 to 35% of peroxyacetic acid;
- from 0.05 to 3.9% of hydrogen peroxide;
- from 50 to 98,5% of acetic acid;
- water balance to 100%,
provided that the amount of peroxyacetic acid is at least equal to 86.5% with respect to the sum of the weights of peroxyacetic acid and hydrogen peroxide.

2. Aqueous solution according to claim 1, **characterized in that** the amount of peroxyacetic acid is at least equal to 88.5% with respect to the sum of the weights of peroxyacetic acid and hydrogen peroxide.

3. Aqueous solution according to claim 1, **characterized in that** the amount of peroxyacetic acid is at least equal to 90.0% with respect to the sum of the weights of peroxyacetic acid and hydrogen peroxide.

4. Aqueous solution according to claim 1, **characterized in that** the amount of peroxyacetic acid is at least equal to 95.0% with respect to the sum of the weights of peroxyacetic acid and hydrogen peroxide.

5. Aqueous solution according to any one of claims 1 to 4, comprising by weight:
- from 5 to 32% of peroxyacetic acid;
- from 0.1 to 3.6% of hydrogen peroxide;
- from 55 to 93% of acetic acid;
- water balance to 100%.

6. Aqueous solution according to claim 5, comprising by weight:
- from 9 to 25% of peroxyacetic acid;
- from 0.8 to 2.8% of hydrogen peroxide;
- from 65 to 85% of acetic acid;
- water balance to 100%.

7. Aqueous solution according to claim 6, comprising by weight:
- 12.1% of peroxyacetic acid;
- 1.0% of hydrogen peroxide;
- 79.1% of acetic acid;
- 7.8% of water.

8. Method for the disinfection of wastewater from biological purifiers consisting of:
- dosing the water to be treated with a solution according to claim 1, in an amount between 5 and 16 g of solution per cubic meter of water;
- leaving the water thus added in a treatment tank for a time of:
- 30 minutes when the amount of peroxyacetic acid is at least equal to 95.0% with respect to the sum of the weights of peroxyacetic acid and hydrogen peroxide;
- 45 minutes when the amount of peroxyacetic acid is at least equal to 90.0% with respect to the sum of the weights of peroxyacetic acid and hydrogen peroxide;
- 60 minutes when the amount of peroxyacetic acid is at least equal to 88.5%% with respect to the sum of the weights of peroxyacetic acid and hydrogen peroxide; and
- 90 minutes when the amount of peroxyacetic acid is at least equal to 86.5% with respect to the sum of the weights of peroxyacetic acid and hydrogen peroxide;
- then unloading the tank.

## Patentansprüche

1. Wässrige Lösung, die in Gewichtsprozent umfasst:
- von 1 bis 35 Gew.-% Peressigsäure;
- von 0,05 bis 3,9 Gew.-% Wasserstoffperoxid;
- von 50 bis 98,5 Gew.-% Essigsäure;
- Rest Wasser bis 100 Gew.-%,
mit der Maßgabe, dass die Menge an Peressigsäure mindestens gleich 86,5 Gew.-%, bezogen auf die Summe der Gewichtsprozente an Peressigsäure und Wasserstoffperoxid, beträgt.

2. Wässrige Lösung nach Anspruch 1, **dadurch gekennzeichnet, dass** die Menge an Peressigsäure mindestens gleich 88,5 Gew.-%, bezogen auf die Summe der Gewichtsprozente an Peressigsäure und Wasserstoffperoxid, beträgt.

3. Wässrige Lösung nach Anspruch 1, **dadurch gekennzeichnet, dass** die Menge an Peressigsäure mindestens gleich 90,0 Gew.-%, bezogen auf die Summe der Gewichtsprozente an Peressigsäure und Wasserstoffperoxid, beträgt.

4. Wässrige Lösung nach Anspruch 1, **dadurch gekennzeichnet, dass** die Menge an Peressigsäure mindestens gleich 95,0 Gew.-%, bezogen auf die Summe der Gewichtsprozente an Peressigsäure und Wasserstoffperoxid, beträgt.

5. Wässrige Lösung nach einem der Ansprüche 1 bis 4, die in Gewichtsprozent umfasst:
- von 5 bis 32 Gew.-% Peressigsäure;
- von 0,1 bis 3,6 Gew.-% Wasserstoffperoxid;
- von 55 bis 93 Gew.-% Essigsäure;
- Rest Wasser bis 100 Gew.-%.

6. Wässrige Lösung nach Anspruch 5, die in Gewichtsprozent umfasst:
- von 9 bis 25 Gew.-% Peressigsäure;
- von 0,8 bis 2,8 Gew.-% Wasserstoffperoxid;
- von 65 bis 85 Gew.-% Essigsäure;
- Rest Wasser bis 100 Gew.-%.

7. Wässrige Lösung nach Anspruch 6, die in Gewichtsprozent umfasst:
- 12,1 Gew.-% Peressigsäure;
- 1,0 Gew.-% Wasserstoffperoxid;
- 79,1 Gew.-% Essigsäure;
- 7,8 Gew.-% Wasser.

8. Verfahren zur Desinfektion von Abwasser aus biologischen Reinigungsanlagen, bestehend aus:
- Dosieren des zu behandelnden Wassers mit einer Lösung nach Anspruch 1 in einer Menge zwischen 5 und 16 g Lösung pro Kubikmeter Wasser;
- Belassen des somit addierten Wassers in einem Behandlungsbecken für eine Zeit von:
- 30 Minuten, wenn die Menge an Peressigsäure mindestens gleich 95,0 Gew.-%, bezogen auf die Summe der Gewichtsprozente an Peressigsäure und Wasserstoffperoxid, beträgt;
- 45 Minuten, wenn die Menge an Peressigsäure mindestens gleich 90,0 Gew.-%, bezogen auf die Summe der Gewichtsprozente an Peressigsäure und Wasserstoffperoxid, beträgt;
- 60 Minuten, wenn die Menge an Peressigsäure mindestens gleich 88,5 Gew.-%, bezogen auf die Summe der Gewichtsprozente an Peressigsäure und Wasserstoffperoxid, beträgt; und
- 90 Minuten, wenn die Menge an Peressigsäure mindestens gleich 86,5 Gew.-%, bezogen auf die Summe der Gewichtsprozente an Peressigsäure und Wasserstoffperoxid, beträgt;
- anschließend Leeren des Beckens.

## Revendications

1. Solution aqueuse comprenant, en poids :
- de 1 à 35 % d'acide peroxyacétique ;
- de 0,05 à 3,9 % de peroxyde d'hydrogène ;
- de 50 à 98,5 % d'acide acétique ;
- complément en eau jusqu'à 100 %,
à condition que la quantité d'acide peroxyacétique soit au moins égale à 86,5 % par rapport à la somme des poids d'acide peroxyacétique et de peroxyde d'hydrogène.

2. Solution aqueuse selon la revendication 1, **caractérisée en ce que** la quantité d'acide peroxyacétique est au moins égale à 88,5 % par rapport à la somme des poids d'acide peroxyacétique et de peroxyde d'hydrogène.

3. Solution aqueuse selon la revendication 1, **caractérisée en ce que** la quantité d'acide peroxyacétique est au moins égale à 90,0 % par rapport à la somme des poids d'acide peroxyacétique et de peroxyde d'hydrogène.

4. Solution aqueuse selon la revendication 1, **caractérisée en ce que** la quantité d'acide peroxyacétique est au moins égale à 95,0 % par rapport à la somme des poids d'acide peroxyacétique et de peroxyde d'hydrogène.

5. Solution aqueuse selon l'une quelconque des revendications 1 à 4, comprenant en poids :
- de 5 à 32 % d'acide peroxyacétique ;
- de 0,1 à 3,6 % de peroxyde d'hydrogène ;
- de 55 à 93 % d'acide acétique ;
- complément en eau jusqu'à 100 %.

6. Solution aqueuse selon la revendication 5, comprenant en poids :
- de 9 à 25 % d'acide peroxyacétique ;
- de 0,8 à 2,8 % de peroxyde d'hydrogène ;
- de 65 à 85 % d'acide acétique ;
- complément en eau jusqu'à 100 %.

7. Solution aqueuse selon la revendication 6, comprenant en poids :
- 12,1 % d'acide peroxyacétique ;
- 1,0 % de peroxyde d'hydrogène ;
- 79,1 % d'acide acétique ;
- 7,8 % d'eau.

8. Procédé de désinfection des eaux usées des purificateurs biologiques consistant à :
- doser de l'eau à traiter avec une solution selon la revendication 1, en quantité comprise entre 5 et 16 g de solution par mètre cube d'eau ;
- laisser l'eau ainsi ajoutée dans une cuve de traitement pendant une durée de :
- 30 minutes lorsque la quantité d'acide peroxyacétique est au moins égale à 95,0 % par rapport à la somme des poids d'acide peroxyacétique et de peroxyde d'hydrogène ;
- 45 minutes lorsque la quantité d'acide peroxyacétique est au moins égale à 90,0 % par rapport à la somme des poids d'acide peroxyacétique et de peroxyde d'hydrogène ;
- 60 minutes lorsque la quantité d'acide peroxyacétique est au moins égale à 88,5%% par rapport à la somme des poids d'acide peroxyacétique et de peroxyde d'hydrogène ; et
- 90 minutes lorsque la quantité d'acide peroxyacétique est au moins égale à 86,5 % par rapport à la somme des poids d'acide peroxyacétique et de peroxyde d'hydrogène ;
- puis décharger la cuve.
